(19) Europäisches Patentamt
European Patent Office
Office européen des brevets

(11) EP 2 993 720 A1

(12) **EUROPEAN PATENT APPLICATION**
published in accordance with Art. 153(4) EPC

(43) Date of publication:
**09.03.2016 Bulletin 2016/10**

(21) Application number: **14822633.5**

(22) Date of filing: **27.06.2014**

(51) Int Cl.:
***H01M 4/60*** *(2006.01)* ***H01M 4/1399*** *(2010.01)*
***H01M 4/36*** *(2006.01)*

(86) International application number:
**PCT/JP2014/067096**

(87) International publication number:
**WO 2015/005135 (15.01.2015 Gazette 2015/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.07.2013 JP 2013143781**

(71) Applicant: **Nitto Denko Corporation**
**Ibaraki-shi, Osaka 567-8680 (JP)**

(72) Inventors:
- **NEGISHI Nobukazu**
  **Ibaraki-shi**
  **Osaka 567-8680 (JP)**
- **KAJISA Yuki**
  **Ibaraki-shi**
  **Osaka 567-8680 (JP)**
- **MORITA Shigenori**
  **Ibaraki-shi**
  **Osaka 567-8680 (JP)**

(74) Representative: **Hoffmann Eitle**
**Patent- und Rechtsanwälte PartmbB**
**Arabellastraße 30**
**81925 München (DE)**

(54) **ELECTRICITY-STORAGE-DEVICE ELECTRODE, MANUFACTURING METHOD THEREFOR, AND ELECTRICITY-STORAGE DEVICE USING SAID ELECTRODE**

(57) For achievement of a power storage device electrode having a high capacity density and a high energy density, a method of manufacturing the same and a power storage device including the same, there is provided a power storage device electrode serving as at least one of a positive electrode and a negative electrode which constitute a power storage device. The power storage device electrode contains an active material including: (A) an electrically conductive polymer; and (B) an anthraquinone compound having at least two amino groups and a structure represented by Formula (1) below.

[Chemical Formula 1]

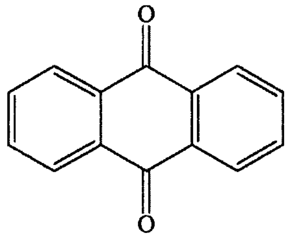

··· (1)

FIG. 1

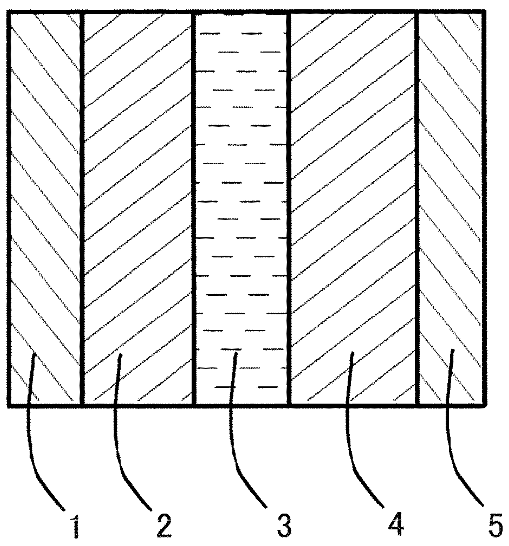


EP 2 993 720 A1

## Description

### TECHNICAL FIELD

The present invention relates to a power storage device electrode, a method of manufacturing the same, and a power storage device including the same.

### BACKGROUND ART

With recent improvement and advancement of electronics technology for mobile PCs, mobile phones, personal digital assistants (PDAs) and the like, secondary batteries and the like, which can be repeatedly charged and discharged, are widely used as power storage devices for these electronic apparatuses. For these secondary batteries and other electrochemical power storage devices, it has been desirable that electrode materials have a higher capacity and a high rate property.

An electrode for such a power storage device contains an active material, which is capable of ion insertion/extraction. The ion insertion/extraction of the active material is also referred to as doping/dedoping, and the doping/dedoping amount per unit molecular structure is referred to as a dope ratio (or doping ratio). A material having a higher doping ratio can provide a higher capacity battery.

From an electrochemical viewpoint, the capacity of the battery can be increased by using an electrode material having a greater ion insertion/extraction amount. In lithium secondary batteries, which are attractive power storage devices, more specifically, a graphite-based negative electrode capable of lithium ion insertion/extraction is used in which about one lithium ion is inserted and extracted with respect to six carbon atoms to provide a higher capacity.

Of these lithium secondary batteries, a lithium secondary battery, which has a higher energy density and is therefore widely used as the power storage device for the aforesaid electronic apparatuses, includes a positive electrode prepared by using a lithium-containing transition metal oxide such as lithium manganese oxide or lithium cobalt oxide as a positive electrode active material and a negative electrode prepared by using a carbon material capable of lithium ion insertion/extraction, the positive electrode and the negative electrode being disposed in opposed relation in an electrolyte solution.

Because of the requirements for a still higher capacity, it has been contemplated in recent years to improve a capacity density per unit volume of the electrode active material. For example, it has been reported that the use of a disulfide-based, quinone-based, diazine-based or radialene-based organic low molecular weight compound as the positive electrode active material of a power storage device causes the power storage device to have a capacity density of a maximum of approximately 500 mAh/g (see NPL 1).

However, the power storage device, which uses the aforementioned organic low molecular weight compound as the electrode active material, is significantly lower in voltage in a discharge period than a power storage device which uses the lithium-containing transition metal oxide as the electrode active material, and is therefore disadvantageous in terms of energy density.

To overcome such a disadvantage, an electrode obtained by combining the organic low molecular weight compound as described above and an organic conductive polymer which promises a higher voltage together has been proposed (see PTL 1 and PTL 2). In addition, the use of an organic low molecular weight compound of a quinone compound and an electrically conductive polymer such as a polyaniline as the electrode active material has also been proposed (see PTL 3).

### RELATED ART DOCUMENT

### PATENT DOCUMENTS

PTL 1: JP-A-HEI9(1997)-259864
PTL 2: JP-A-HEI6(1994)-20692
PTL 3: JP-A-HEI11(1999)-144732

### NON-PATENT DOCUMENT

NPL 1: Nikkei Electronics, Dec. 13, 2010, pp. 73-82

However, the use of the electrodes disclosed in the aforementioned patent documents presents a problem in that the repetition of charge/discharge gradually decreases the capacity thereof. This is considered to result from the

fact that the aforementioned organic low molecular weight compound serving as the electrode active material has a high degree of solubility in an electrolyte solution, so that the repetition of charge/discharge causes the electrode active material dissolved in the electrolyte solution to gradually become less able to contribute to an electrode reaction.

The power storage devices including the electrode active material are still insufficient in capacity density and in energy density. In particular, a lightweight and high-capacity material has been needed in the field of portable PCs and the like where weight reduction is required, but an effective material has not yet been found under the present circumstances.

SUMMARY OF INVENTION

In view of the foregoing, the present invention provides a power storage device electrode having a high capacity density and a high energy density, a method of manufacturing the same, and a power storage device including the same.

A first aspect of the present invention is a power storage device electrode serving as at least one of a positive electrode and a negative electrode which constitute a power storage device, the power storage device electrode containing an active material comprising:

(A) an electrically conductive polymer; and
(B) an anthraquinone compound having at least two amino groups and a structure represented by formula (1) below.

[Chemical Formula 1]

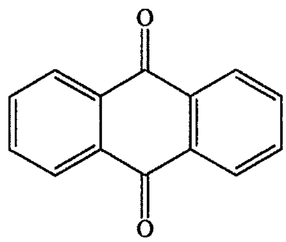

··· (1)

A second aspect of the present invention is a method of manufacturing a power storage device electrode. The method comprises the step of mixing a powder of the component (A) and a powder of the component (B) together to use a resulting mixture as an active material. A third aspect of the present invention is a power storage device comprising such a power storage device electrode.

The present inventors have diligently made studies to solve the aforementioned problems. In the course of the studies, the present inventors have mainly investigated various low molecular weight materials such as triquinoxalinylene, rubeanic acid and mercaptan, and verified effects obtained when the low molecular weight materials are compounded with an electrically conductive polymer. As a result, the present inventors have found that the formation of a power storage device electrode from a composite product comprised of an anthraquinone compound having at least two amino groups and an electrically conductive polymer as an active material significantly improves a capacity density and an energy density beyond their expectations.

The reason why the performance of a power storage device is significantly improved in this manner is not clear, but is considered to result from the fact that the power storage device has a mechanism to be described below. In a charging process of the power storage device including the electrode of the present invention, an electrochemical polymerization reaction occurs through at least two amino groups of the component (B) in the electrode to form an anthraquinone polymer. The anthraquinone polymer formed in this manner has a skeleton similar to that of an electrically conductive polymer such as polyaniline, and therefore is considered to increase the number of reacting electrons on the electrode. The component (B) in the electrode is considered to have a stronger interaction with the electrically conductive polymer present in proximity thereof because of the occurrence the polymerization reaction thereof. In such a situation in the electrode, a quinone portion is supposed to show an interaction stabilizing a cation on the electrically conductive polymer, thereby contributing to the increase in the driving voltage of the power storage device.

The power storage device electrode according to the present invention serves as at least one of the positive electrode and the negative electrode which constitute the power storage device, and contains the active material comprising the electrically conductive polymer (A), and the specific anthraquinone compound (B). This allows the formation of a high-performance power storage device having a high capacity density and a high energy density.

When the electrically conductive polymer (A) is at least one of polyaniline and a polyaniline derivative, the capacity density and the energy density become higher, and the capacity density and the like thereof are stabilized.

When the weight ratio (A:B) between the electrically conductive polymer (A) and the anthraquinone compound

(B) is in the range from 50:50 to 1:99, the capacity density and the energy density become much higher. Although the detailed mechanism is not clear, it is inferred that the weight ratio between the components (A) and (B) in the aforementioned range improves a battery reaction rate in a quinone portion and an amino group connection portion of the component (B) to provide the effect of improving an electron migration reaction due to an intermolecular interaction.

BRIEF DESCRIPTION OF DRAWINGS

FIG. 1 is a sectional view showing a structure of a power storage device.
FIG. 2 is an illustration showing the behavior of electrochemical polymerization of 1,5-diaminoanthraquinone inferred in an early discharge process of the power storage device.
FIG. 3 is a graph showing results of a capacity density (mAh/g) and an energy density (mWh/g) in Inventive Examples 1 and 3 in the case where an upper limit to a charging voltage is 4.0 V (left) and 4.3 V (right).

DESCRIPTION OF EMBODIMENTS

An embodiment of the present invention will hereinafter be described in detail by way of example but not by way of limitation.
A power storage device electrode according to the present invention has the most striking characteristic in that it contains an active material comprising:

(A) an electrically conductive polymer; and
(B) an anthraquinone compound having at least two amino groups and a structure represented by Formula (1) below (hereinafter abbreviated as an "anthraquinone compound" in some cases).

[Chemical Formula 2]

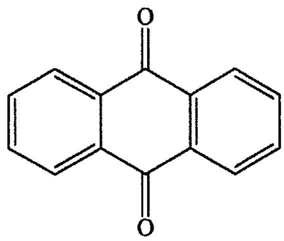

... (1)

The power storage device electrode according to the present invention may be used as both a positive electrode and a negative electrode of a power storage device, but is preferably used, in particular, as a power storage device positive electrode (hereinafter abbreviated simply as a "positive electrode" in some cases). The power storage device electrode according to the present invention for use as the positive electrode will be described below.
The power storage device includes, for example, an electrolyte layer 3, and a positive electrode 2 and a negative electrode 4 provided in opposed relation with the electrolyte layer 3 interposed therebetween as shown in FIG. 1, and the positive electrode according to the present invention is used as the positive electrode 2 of the power storage device. In FIG. 1, the reference numerals 1 and 5 designate a positive electrode current collector and a negative electrode current collector, respectively.
The positive electrode, the electrolyte layer and the negative electrode will be successively described.

<Positive Electrode 2>

The positive electrode according to the present invention is formed by using a positive electrode material containing the active material including the electrically conductive polymer (A) and the anthraquinone compound (B) as described below.

[Electrically Conductive Polymer (A)]

The electrically conductive polymer described above is herein defined as any of polymers which have an electrical conductivity variable due to insertion or extraction of ion species with respect to the polymer in order to compensate for change in electric charge to be generated or removed by an oxidation reaction or a reduction reaction occurring in a main chain of the polymer.

The polymer has a higher electrical conductivity in a doped state, and has a lower electrical conductivity in a dedoped state. Even if the electrically conductive polymer loses its electrical conductivity due to the oxidation reaction or the reduction reaction to be thereby electrically insulative (in the dedoped state), the polymer can reversibly have an electrical conductivity again due to the oxidation/reduction reaction. Therefore, the electrically insulative polymer in the dedoped state is herein also classified into the category of the electrically conductive polymer.

A preferred example of the electrically conductive polymer is a polymer containing a dopant of at least one protonic acid anion selected from the group consisting of inorganic acid anions, aliphatic sulfonate anions, aromatic sulfonate anions, polymeric sulfonate anions and polyvinyl sulfate anions. Another preferred example of the electrically conductive polymer is a polymer obtained in the dedoped state by dedoping the electrically conductive polymer described above.

Specific examples of the electrically conductive polymer include: electrically conductive polymer-based materials such as polyacetylene, polypyrrole, polyaniline, polythiophene, polyfuran, polyselenophene, polyisothianaphthene, polyphenylene sulfide, polyphenylene oxide, polyazulene and poly(3,4-ethylenedioxythiophene); carbon-based materials such as polyacene, acetylene black, graphite, carbon nanotubes, carbon nanofibers and graphene; and inorganic materials such as lithium cobalt oxide, lithium manganese oxide, lithium nickel acid and lithium iron phosphate. In particular, polyaniline and polyaniline derivatives each having a higher electrochemical capacity are preferably used.

In the present invention, polyaniline is a polymer prepared by electrochemical polymerization or chemical oxidative polymerization of aniline, and the polyaniline derivatives are polymers prepared by electrochemical polymerization or chemical oxidative polymerization of aniline derivatives.

Examples of the aniline derivatives include aniline derivatives prepared by substituting aniline at positions other than the 4-position thereof with at least one substituent selected from the group consisting of alkyl groups, alkenyl groups, alkoxy groups, aryl groups, aryloxy groups, alkylaryl groups, arylalkyl groups and alkoxyalkyl groups. Specific examples of the aniline derivatives include o-substituted anilines such as o-methylaniline, o-ethylaniline, o-phenylaniline, o-methoxyaniline and o-ethoxyaniline, and m-substituted anilines such as m-methylaniline, m-ethylaniline, m-methoxyaniline, m-ethoxyaniline and m-phenylaniline, which may be used either alone or in combination.

"Aniline or an aniline derivative" is herein referred to simply as "aniline" unless otherwise specified. "At least one of the polyaniline and the polyaniline derivative" is herein referred to simply as "polyaniline" unless otherwise specified. Even if a polymer for the electrically conductive polymer is prepared from an aniline derivative, therefore, the resulting polymer is referred to as "electrically conductive polyaniline".

As is well known, the electrically conductive polyaniline in the present invention can be prepared by electrochemical polymerization of aniline in a proper solvent in the presence of a protonic acid or by chemical oxidative polymerization of aniline with the use of an oxidizing agent. Preferably, the electrically conductive polyaniline is prepared by the oxidative polymerization of aniline in a proper solvent in the presence of a protonic acid with the use of an oxidizing agent. In general, water is used as the solvent, but other usable examples of the solvent include solvent mixtures of water soluble organic solvents and water, and solvent mixtures of water and nonpolar organic solvents. In this case, a surface active agent or the like is sometimes used in combination with the solvent.

As an example, an instance where water is used as the solvent for the oxidative polymerization of aniline will be described in further detail. Aniline is polymerized in water in the presence of a protonic acid with the use of a chemical oxidizing agent through the chemical oxidative polymerization. The chemical oxidizing agent used herein may be water-soluble or water-insoluble.

Preferable examples of the oxidizing agent include ammonium peroxodisulfate, hydrogen peroxide, potassium bichromate, potassium permanganate, sodium chlorate, cerium ammonium nitrate, sodium iodate and iron chloride.

The amount of the oxidizing agent to be used for the oxidative polymerization of aniline is related to the yield of the electrically conductive polyaniline. For stoichiometric reaction of aniline, the oxidizing agent is preferably used in an amount (2.5/n) times the molar amount of aniline to be used, wherein n is the number of electrons required for the reduction of one molecule of the oxidizing agent. In the case of ammonium peroxodisulfate, for example, n is 2 as can be understood from the following reaction formula:

$$(NH_4)_2S_2O_8 + 2e \Rightarrow 2NH_4^+ + 2SO_4^{2-}$$

However, for the purpose of suppressing the peroxidization of polyaniline, there are cases in which the amount of the oxidizing agent is slightly smaller than the amount (2.5/n) times the molar amount of aniline to be used, and there are further cases in which the amount of the oxidizing agent is 30% to 80% of the amount (2. 5/n) times the molar amount

of aniline.

In the production of the electrically conductive polyaniline, the protonic acid serves to dope the produced polyaniline for imparting the polyaniline with electrical conductivity and for dissolving aniline in the form of salt in water. The protonic acid also serves to maintain the polymerization reaction system at a strong acidity level, preferably, with a pH of not higher than 1. Therefore, the amount of the protonic acid is not particularly limited in the production of the electrically conductive polyaniline, as long as the above purposes can be achieved. In general, the amount of the protonic acid is 1.1 to 5 times the molar amount of aniline. If the amount of the protonic acid is excessively great, the costs of a waste liquid treatment required after the oxidative polymerization of aniline is needlessly increased. Therefore, the amount of the protonic acid is preferably 1.1 to 2 times the molar amount of aniline. Thus, a protonic acid having a strong acidity is preferably used, and a protonic acid having an acid dissociation constant pKa of less than 3.0 is more preferably used.

Preferred examples of the protonic acid having an acid dissociation constant pKa of less than 3.0 include inorganic acids such as sulfuric acid, hydrochloric acid, nitric acid, perchloric acid, tetrafluoroboric acid, hexafluorophosphoric acid, hydrofluoric acid and hydroiodic acid, aromatic sulfonic acids such as benzenesulfonic acid and p-toluenesulfonic acid, and aliphatic sulfonic acids (or alkanesulfonic acids) such as methanesulfonic acid and ethanesulfonic acid. Further, a polymer having a sulfonic acid group in its molecule, i.e. , a polymer sulfonic acid, is also usable. Examples of the polymer sulfonic acid include polystyrene sulfonic acid, polyvinyl sulfonic acid, polyallyl sulfonic acid, poly(acrylamide-t-butylsulfonic acid), phenol sulfonic acid novolak resin, and perfluorosulfonic acid such as NAFION (registered trade name). In the present invention, polyvinyl sulfuric acid is also usable as the protonic acid.

Other examples of the protonic acid to be used for the production of the electrically conductive polyaniline include some kinds of phenols such as picric acid, some kinds of aromatic carboxylic acids such as m-nitrobenzoic acid, and some kinds of aliphatic carboxylic acids such as dichloroacetic acid and malonic acid, which each have an acid dissociation constant pKa of less than 3.0.

Of the various protonic acids described above, tetrafluoroboric acid and hexafluorophosphoric acid are preferably used because they are protonic acids each containing the same anion species as a base metal salt of an electrolyte salt of a nonaqueous electrolyte solution in a nonaqueous electrolyte secondary battery, and because, in the case of a lithium secondary battery, for example, they are protonic acids each containing the same anion species as a lithium salt of an electrolyte salt of a nonaqueous electrolyte solution in the lithium secondary battery.

Electrically conductive polypyrrole is prepared in powder form by chemical oxidative polymerization of pyrrole with the use of a suitable chemical oxidizing agent in a pyrrole aqueous solution containing sodium alkylbenzene sulfonates such as sodium dodecylbenzenesulfonate and organic sulfonates such as sodium anthraquinone sulfonate, for example. Electrically conductive polypyrrole is also prepared as a thin film on an anode by electrolytic oxidative polymerization of pyrrole with the use of a stainless steel electrode in the aforementioned pyrrole aqueous solution containing the sodium alkylbenzene sulfonates and the organic sulfonates. In such manufacturing methods, the sodium alkylbenzene sulfonates and the organic sulfonates function as an electrolyte, and an alkylbenzene sulfonate anion and an organic sulfonate anion function as a dopant of the produced polypyrrole to impart electrical conductivity to the polypyrrole.

In the present invention, the electrically conductive polymer may be a polymer doped with the protonic acid anion as mentioned above or a polymer obtained in the dedoped state by dedoping the polymer doped with the protonic acid anion in this manner. The polymer in the dedoped state may be further subjected to a reduction treatment, as required.

An exemplary method of dedoping the electrically conductive polymer includes a process which uses an alkali to neutralize the electrically conductive polymer doped with the protonic acid anion. An exemplary method of dedoping the electrically conductive polymer doped with the protonic acid anion and thereafter performing the reduction treatment includes a process which uses an alkali to neutralize the electrically conductive polymer doped with the protonic acid anion, thereby dedoping the electrically conductive polymer, and then performs the reduction treatment using a reducing agent on the dedoped polymer thus obtained.

For the neutralization of the electrically conductive polymer doped with the protonic acid anion with the use of the alkali, the electrically conductive polymer may be put in an alkali aqueous solution such as a sodium hydroxide aqueous solution, a potassium hydroxide aqueous solution and ammonia water, for example, and be stirred at room temperature or at an increased temperature of approximately 50° to 80°C, as required. The alkali treatment at the increased temperature accelerates the dedoping reaction of the electrically conductive polymer to achieve the dedoping in a short time.

For the reduction treatment of the dedoped polymer as mentioned above, the dedoped polymer may be put in a reducing agent solution such as a hydrazine monohydrate aqueous solution, a phenylhydrazine/alcohol solution, a sodium dithionite aqueous solution and a sodium sulfite aqueous solution, and be stirred at room temperature or at an increased temperature of approximately 50° to 80°C, as required.

[Anthraquinone Compound (B)]

The component (B) used with the aforementioned component (A) is an anthraquinone compound having at least two amino groups and a structure represented by Formula (1) below.

[Chemical Formula 3]

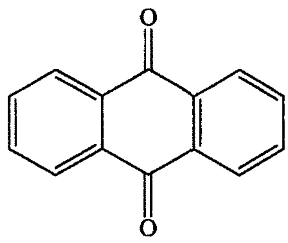

··· (1)

Specific examples of such an anthraquinone compound (B) include 1,5-diaminoanthraquinone represented by Formula (2) below, 1,4-diaminoanthraquinone represented by Formula (3) below and 2,6-diaminoanthraquinone represented by Formula (4) below. In particular, 1,5-diaminoanthraquinone is preferably used because the polymerization reaction thereof is easy due to the selective occurrence of the polymerization reaction at the para-position and because it is stable in terms of a three-dimensional structure.

[Chemical Formula 4]

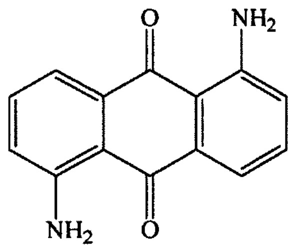

··· (2)

[Chemical Formula 3]

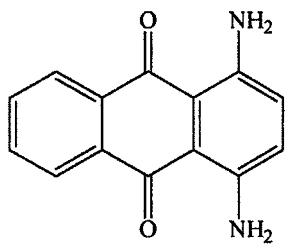

··· (3)

[Chemical Formula 6]

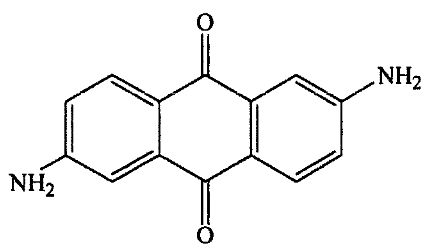

··· (4)

The anthraquinone compound (B) preferably has a molecular weight of not greater than 268 because this can increase the capacity density and the like of the power storage device due to electrochemical polymerization in a charging process after the production of the power storage device, and more preferably has a molecular weight of not greater than 253. The lower limit to the molecular weight is generally not less than 223.

As for the electrochemical polymerization of the component (B), it is considered that the amino groups are oxidized in the charging process, and the behavior of the electrochemical polymerization of 1,5-diaminoanthraquinone is shown in a discharging process, as shown in FIG. 2.

The weight ratio (A:B) between the electrically conductive polymer (A) and the anthraquinone compound (B) is preferably in the range from 50:50 to 1:99 because this further improves the capacity density and the energy density, and more preferably in the range from 40:60 to 10:90.

In particular, when the component (A) is polyaniline, both the capacity density and the energy density are maximized near the weight ratio of (A):(B) = 1:4. It can be inferred that, in terms of molar ratio, the ratio of an anthraquinone unit to polyaniline is approximately 1:1.5 which is nearly equimolar, so that polyaniline accelerates a redox reaction in a connection portion and a quinone portion of anthraquinone. Although the detailed mechanism is unknown, it is considered that a similar structure of a connection portion of polyaniline and anthraquinone efficiently causes electron migration in the electrode.

The proportion of the active material including the component (A) and the component (B) is preferably 0.1% to 40% by weight, more preferably 1% to 30% by weight, and particularly preferably 2% to 20% by weight, based on the total weight of the positive electrode material. When the amount of the active material is too great, the decrease in electrical conductivity increases the number of unreacted portions, so that an actual capacity density tends to decrease. When the amount of the active material is too small, it tends to be difficult to provide a power storage device having a high capacity density.

Further, a binder, a conductive agent and the like together with the aforementioned electrically conductive polymer (A) and the anthraquinone compound (B) may be appropriately mixed in the positive electrode material, when required.

[Conductive Agent]

The conductive agent is only required to be an electrically conductive material free from change in its properties depending on a potential applied during the discharge of the power storage device. Examples of the conductive agent include electrically conductive carbon materials and metal materials. In particular, electrically conductive carbon blacks such as acetylene black and Ketjen black, and fibrous carbon materials such as carbon fibers and carbon nanotubes are preferably used. Electrically conductive carbon blacks are especially preferable.

The proportion of the conductive agent is preferably 40% to 99% by weight, more preferably 50% to 95% by weight, and particularly preferably 60% to 90% by weight, based on the total weight of the positive electrode material. When the amount of the conductive agent is too great, electrode moldability tends to be poor. When the amount of the conductive agent is too small, it tends to be difficult to provide a power storage device having a high capacity density.

[Binder]

Examples of the binder include anionic materials such as polycarboxylic acid, polytetrafluoroethylene (PTFE), and vinylidene fluoride, which may be used either alone or in combination. In particular, polytetrafluoroethylene is preferably used.

The proportion of the binder is preferably 0.1% to 40% by weight, more preferably 1% to 30% by weight, particularly preferably 2% to 20% by weight, based on the total weight of the positive electrode material. When the amount of the binder is too great, it tends to be difficult to provide a power storage device having a high capacity density. When the amount of the binder is too small, electrode moldability tends to be poor.

The positive electrode is manufactured with the use of the aforementioned positive electrode material. Examples of the method of producing the positive electrode include a method of mixing and compression molding the positive electrode material, and a method of coating the positive electrode material by adding a solvent to the positive electrode material. A specific example of the former method includes the steps of mixing at least the electrically conductive polymer (A) in powder form and the anthraquinone compound (B) in powder form together to form a composite active material, mixing positive electrode materials containing the composite active material in a mortar, and then forming an electrode on a current collector by means of a compression molding machine. An example of the compression molding machine includes a jack molding machine. A specific example of the latter method includes the steps of adding the positive electrode material to water, dispersing the positive electrode material sufficiently to prepare a paste, applying the paste onto a current collector, evaporating the water to thereby form a sheet electrode in the form of a homogeneous composite mixture of the active material and the like on the current collector.

The electrode according to the present invention has a porosity which is preferably 20% to 90% by volume, particularly preferably 30% to 80% by volume, and more preferably 40% to 70% by volume. When the porosity is too low, the energy density tends to decrease. When the porosity is too high, the conductive agent and the binder tend to have poor dispersibility.

The porosity is calculated by the following equation:

$$\text{Porosity (\%) of electrode} = \{(\text{apparent volume of electrode} - \text{absolute volume of electrode})/\text{apparent volume of electrode}\} \times 100$$

The apparent volume of the electrode as used in the present invention refers to "electrode area of electrode × electrode thickness", and specifically is the sum total of the volume of the substance of the electrode, the volume of voids in the electrode and the volume of the space of uneven portions on the surface of the electrode. The absolute volume of the electrode as used in the present invention refers to the "volume of electrode constituent materials". Specifically, the absolute volume of the electrode is determined by calculating the mean density of all electrode constituent materials with the use of the constituent weight proportion of the electrode constituent materials and the value of the true density of each constituent material and then dividing the sum total of the weights of the electrode constituent materials by the mean density.

The positive electrode according to the present invention preferably has a thickness of 1 to 2000 μm, more preferably 10 to 1000 μm, and particularly preferably 100 to 900 μm. The thickness of the positive electrode is measured, for example, by means of a dial gage (available from Ozaki Mfg. Co., Ltd.) which is a flat plate including a distal portion having a diameter of 5 mm. The measurement is performed at ten points on a surface of the electrode, and the measurement values are averaged. In the case where the positive electrode (porous layer) is provided on the current collector and combined with the current collector, the thickness of the combined product is measured in the aforementioned manner, and the measurement values are averaged. Then, the thickness of the positive electrode is determined by subtracting the thickness of the current collector from the average thickness of the combined product.

The power storage device is produced by using the aforementioned power storage device electrode as the positive electrode thereof. As described above, FIG. 1 shows an example of the power storage device according to the present invention. The power storage device includes the electrolyte layer 3, and the positive electrode 2 and the negative electrode 4 provided in opposed relation with the electrolyte layer 3 interposed therebetween. The reference numerals 1 and 5 designate the positive electrode current collector and the negative electrode current collector, respectively. FIG. 1 schematically shows the structure of the power storage device, and the thicknesses and the like of the respective layers shown are different from the actual ones.

<Electrolyte Layer 3>

The electrolyte layer 3 described above is formed from an electrolyte. For example, a sheet including a separator impregnated with an electrolyte solution or a sheet made of a solid electrolyte is preferably used. The sheet made of the solid electrolyte per se functions as a separator.

The electrolyte includes a solute and, as required, a solvent and additives. Preferred examples of the solute include compounds prepared by combining a metal ion such as a lithium ion with a proper counter ion such as a sulfonate ion, a perchlorate ion, a tetrafluoroborate ion, a hexafluorophosphate ion, a hexafluoroarsenate ion, a bis(trifluoromethanesulfonyl)imide ion, a bis(pentafluoroethanesulfonyl)imide ion or a halide ion. Accordingly, specific examples of the electrolyte include $LiCF_3SO_3$, $LiClO_4$, $LiBF_4$, $LiPF_6$, $LiAsF_6$, $LiN(SO_2CF_3)_2$, $LiN(SO_2C_2F_5)_2$ and LiCl.

Examples of the aforementioned solvent include nonaqueous solvents, i.e., organic solvents, such as carbonates, nitriles, amides and ethers, at least one of which is used. Specific examples of the organic solvents include ethylene carbonate, propylene carbonate, butylene carbonate, dimethyl carbonate, diethyl carbonate, ethyl methyl carbonate, acetonitrile, propionitrile, N,N'-dimethylacetamide, N-methyl-2-pyrrolidone, dimethoxyethane, diethoxyethane and γ-butyrolactone, which may be used either alone or in combination. A solution prepared by dissolving the solute in the solvent may be referred to as an "electrolyte solution".

<Separator>

In the present invention, a separator can be used in a variety of forms. The separator is configured such that the positive electrode and the negative electrode are disposed in opposed relation with the separator interposed therebetween. The separator prevents an electrical short circuit between the positive electrode and the negative electrode. The separator may be an insulative porous sheet which is electrochemically stable and which has a higher ionic permeability and a certain mechanical strength. Therefore, exemplary materials of the separator include paper, nonwoven fabric, and porous films made of a resin such as polypropylene, polyethylene or polyimide, which may be used either alone or in combination.

<Negative Electrode 4>

The negative electrode described above is preferably formed using at least one (negative electrode active material) of a compound capable of ion insertion/extraction and a metal. Examples of the negative electrode active material include metal lithium, carbon materials and transition metal oxides capable of insertion and extraction of lithium ions in oxidation and reduction, silicon and tin. The negative electrode 4 preferably has substantially the same thickness as the positive electrode 2.

The power storage device electrode according to the present invention is not limited to the positive electrode 2 but may be used as the negative electrode 4.

<Positive Electrode Current Collector 1 and Negative Electrode Current Collector 5>

The positive electrode current collector 1 and the negative electrode current collector 5 in FIG. 1 will be described. Exemplary materials of these current collectors include metal foils such as of nickel, aluminum, stainless steel and copper, and meshes. The positive electrode current collector 1 and the negative electrode current collector 5 may be formed of the same material or may be formed of different materials.

<Method of Manufacturing Power Storage Device>

The power storage device according to the present invention is produced, for example, in the following manner by using the material of the negative electrode and the like. That is, the positive electrode, the separator and the negative electrode are stacked with the separator interposed between the positive electrode and the negative electrode, whereby a stacked component is prepared. The stacked component is put in a battery container such as an aluminum laminate package, and then the resulting battery container is dried in vacuum. Next, an electrolyte solution is injected in the battery container dried in vacuum, and an opening of the package (battery container) is sealed. Thus, the power storage device is produced. The battery production process including the injection of the electrolyte solution in the package is preferably performed in a glove box in an inert gas atmosphere such as an ultrapure argon gas atmosphere.

Besides the laminate cell, the power storage device according to the present invention may be provided in a variety of forms including a film form, a sheet form, a square form, a cylindrical form and a button form. In the case of the laminate cell, the positive electrode of the power storage device preferably has an edge length of 1 to 300 mm, particularly preferably 10 to 50 mm, and the negative electrode preferably has an edge length of 1 to 400 mm, particularly preferably 10 to 60 mm. The negative electrode preferably has a slightly greater size than the positive electrode.

EXAMPLES

Inventive examples will hereinafter be described in conjunction with comparative examples. However, the present invention is not limited to these examples.

The following components were prepared before the production of power storage devices according to the inventive examples and the comparative examples.

[Electrically Conductive Polymer (A)]

Electrically conductive polyaniline powder containing tetrafluoroboric acid as a dopant was prepared in the following manner as an electrically conductive polymer (A). That is, 84.0 g (0.402 mol) of a tetrafluoroboric acid aqueous solution (special grade reagent available from Wako Pure Chemical Industries, Ltd.) having a concentration of 42% by weight was added to 138 g of ion-exchanged water contained in a 300-mL volume glass beaker. Then, 10.0 g (0.107 mol) of aniline was added to the resulting solution, while the solution was stirred by a magnetic stirrer. Immediately after the addition of aniline to the tetrafluoroboric acid aqueous solution, aniline was dispersed in an oily droplet form in the tetrafluoroboric acid aqueous solution, and then dissolved in water in several minutes to provide a homogeneous transparent aniline aqueous solution. The aniline aqueous solution thus provided was cooled to -4°C or lower with the use of a refrigerant bath.

Then, 11.63 g (0.134 mol) of a powdery manganese dioxide oxidizing agent (Grade-1 reagent available from

Wako Pure Chemical Industries, Ltd.) was added little by little to the aniline aqueous solution, while the mixture in the beaker was kept at a temperature of not higher than -1°C. Immediately after the oxidizing agent was thus added to the aniline aqueous solution, the color of the aniline aqueous solution turned dark green. Thereafter, the solution was continuously stirred, whereby generation of a dark green solid began.

After the oxidizing agent was added for 80 minutes in this manner, the resulting reaction mixture containing the reaction product thus generated was cooled, and further stirred for 100 minutes. Thereafter, the resulting solid was suction-filtered through No. 2 filter paper (available from ADVANTEC Corporation) with the use of a Buchner funnel and a suction bottle to provide powder. The powder was washed in an about 2 mol/L tetrafluoroboric acid aqueous solution with stirring by means of the magnetic stirrer, then washed in acetone several times with stirring, and suction-filtered. The resulting powder was dried in vacuum at a room temperature (25°C) for 10 hours. Thus, 12.5 g of an electrically conductive polyaniline containing tetrafluoroboric acid as a dopant (hereinafter referred to simply as an "electrically conductive polyaniline") was provided, which was bright green powder.

(Electrical Conductivity of Electrically Conductive Polyaniline Powder)

After 130 mg of the electrically conductive polyaniline powder was milled in an agate mortar, the resulting powder was compacted into an electrically conductive polyaniline disk having a thickness of 720 μm in vacuum at a pressure of 75 MPa for 10 minutes by means of a KBr tablet forming machine for infrared spectrum measurement. The disk had an electrical conductivity of 19.5 S/cm as measured by a Van der Pauw four-point electrical conductivity measurement method.

(Preparation of Electrically Conductive Polyaniline Powder in Dedoped State)

The electrically conductive polyaniline powder prepared in the doped state in the aforementioned manner was put in a 2 mol/L sodium hydroxide aqueous solution, and stirred in a 3-L separable flask for 30 minutes. Thus, the electrically conductive polyaniline powder was dedoped with the tetrafluoroboric acid dopant through a neutralization reaction. The dedoped polyaniline was washed with water until the filtrate became neutral. Then, the dedoped polyaniline was washed in acetone with stirring, and suction-filtered through No. 2 filter paper with the use of a Buchner funnel and a suction bottle. Thus, dedoped polyaniline powder was provided on the No.2 filter paper. The resulting powder was dried in vacuum at a room temperature for 10 hours, whereby brown dedoped polyaniline powder was provided.

(Preparation of Polyaniline Powder in Reduced Dedoped State)

Next, the dedoped polyaniline powder was put in a phenylhydrazine methanol aqueous solution, and reduced for 30 minutes with stirring. Due to the reduction, the color of the polyaniline powder turned from brown to gray. After the reaction, the resulting polyaniline powder was washed with methanol and then with acetone, filtered, and dried in vacuum at a room temperature. Thus, reduced dedoped polyaniline was provided.

A particle of the resulting powder had a median diameter of 13 μm as measured by a light scattering method by using acetone as a solvent.

(Electrical Conductivity of Reduced Dedoped Polyaniline Powder)

After 130 mg of the reduced dedoped polyaniline powder was milled in an agate mortar, the resulting powder was compacted into a reduced dedoped polyaniline disk having a thickness of 720 μm in vacuum at a pressure of 75 MPa for 10 minutes by means of a KBr tablet forming machine for infrared spectrum measurement. The disk had an electrical conductivity of $5.8 \times 10^{-3}$ S/cm as measured by a Van der Pauw four-point electrical conductivity measurement method. This means that the polyaniline compound is an active material compound having an electrical conductivity variable due to ion insertion/extraction.

[Anthraquinone Compound (B)]

Prepared was 1,5-diaminoanthraquinone (1,5-DIAMINOANTHRAQUINONE available from Tokyo Chemical Industry Co., Ltd.).

[Preparation of Negative Electrode Material]

A rolled lithium foil (available from Honjo Metal Co. , Ltd.) having a thickness of 0.05 mm was prepared.

[Preparation of Electrolyte Solution]

An ethylene carbonate/dimethyl carbonate solution (a volume ratio of 1 to 1) containing lithium hexafluorophosphate ($LiPF_6$) at a concentration of 1 mol/$dm^3$ (LGB-00022 available from Kishida Chemical Co., Ltd.) was prepared.

[Preparation of Separator]

A separator nonwoven fabric (TF40-50 available from Nippon Kodoshi Corporation) was prepared.

[Current Collectors]

A 30-μm thick aluminum foil was prepared as a positive electrode current collector, and a 180-μm thick stainless steel mesh was prepared as a negative electrode current collector.

[Inventive Example 1]

<Manufacture of Positive Electrode Using Components (A) and (B) >

A composite active material prepared by mixing the polyaniline powder (A) and the 1,5-diaminoanthraquinone (B) together at a weight ratio (A:B) of 1:1, acetylene black (DENKA BLACK available from Denki Kagaku Kogyo Kabushiki Kaisha) serving as a conductive agent, and polytetrafluoroethylene (F-302 available from Daikin Industries, Ltd.) were mixed together in an agate mortar so that a weight ratio between the composite active material, the conductive agent and the binder was 10:80:10. Then, compression molding (4kN) was performed on the resulting mixture to form a composite electrode on an aluminum mesh current collector. This electrode layer had a thickness (not including the current collector) of 700 to 800 μm, and a weight of approximately 50 mg.

The positive electrode, the negative electrode and the separator were put into a glove box immediately after being dried at 80°C for 2 hours by means of a vacuum dryer. Then, the negative electrode, the separator and the positive electrode were combined in the order named so that the negative electrode and the positive electrode were out of contact with each other, and were inserted between aluminum laminated films. The resulting structure was heat-sealed. After the addition of an electrolyte solution, the resulting structure was heat-sealed hermetically, whereby a laminate cell lithium secondary battery was produced.

<Characteristics of Lithium Secondary Battery>

(Method of Calculating Theoretical Capacity Density)

A theoretical capacity density (mAh/g) of the active material of the electrode can be calculated by Equation (5) below.

[MATH. 1]

Theoretical capacity density (mAh/g) = 26950 × (the number of reaction-involved electrons/molecular weight) (5)

For the calculation of the theoretical capacity density of polyaniline, for example, it is known that the maximum molecular weight (molecular weight of a monomer unit in the case of a polymer) of polyaniline is 92 g and the maximum doping ratio is 0.5. Thus, the number of reaction-involved electrons is 0.5 for a doping ratio of 50%. By substituting this value into Equation (5), a theoretical capacity density of 144 mAh/g is obtained.

(Method of Measuring Capacity Density and Energy Density)

The characteristics of the assembled lithium secondary battery were measured in a constant current and constant voltage charge/constant current discharge mode by means of a battery charge/discharge device (SD8 available from Hokuto Denko Corporation). Unless otherwise specified, the lithium secondary battery was charged at a constant voltage of 4.0V until the current value was attenuated to 20% of a 0.2C-equivalent. This was defined as a single charge process. Next, the lithium secondary battery was discharged at a 0.2C-equivalent current value until the voltage reached 2.0 V. This was defined as a single charge/discharge cycle. This was repeated, and a measured capacity density (mAh/g) and a measured energy density (mWh/g) per positive electrode active material were measured with respect to a discharge capacity of the third charge/discharge cycle.

Herein, 0.2C denotes a 5-hour rate which in turn means a current value at which five hours are required to

charge or discharge a battery.

The value of measured capacity density/theoretical capacity density was also shown below in TABLE 1. When this value exceeds 1, the capacity density better than the theoretical value is obtained. The higher this value, the higher the measured capacity density per active material, which achieves the production of a compact secondary battery.

The lithium secondary battery had a measured capacity density of 269 mAh/g and a measured energy density of 697 mWh/g.

[Inventive Examples 2 and 3]

Lithium secondary batteries in Inventive Examples 2 and 3 were produced in substantially the same manner as in Inventive Example 1, except that the polyaniline powder (A) and the 1,5-diaminoanthraquinone (B) in Inventive Example 1 were mixed together at respective weight ratios (A:B) shown in TABLE 1.

[Inventive Example 4]

A lithium secondary battery was produced in substantially the same manner as in Inventive Example 1, except that the component (B) in Inventive Example 1 was replaced with 1,4-diaminoanthraquinone.

[Inventive Example 5]

A lithium secondary battery was produced in substantially the same manner as in Inventive Example 1, except that the component (B) in Inventive Example 1 was replaced with 2,6-diaminoanthraquinone.

[Comparative Example 1]

A lithium secondary battery was produced in substantially the same manner as in Inventive Example 1, except that the positive electrode active material did not include the polyaniline powder (A) but included only the 1,5-diaminoanthraquinone (B).

[Comparative Example 2]

A lithium secondary battery was produced in substantially the same manner as in Inventive Example 1, except that the positive electrode active material included only the polyaniline powder (A) but did not include the component (B).

[Comparative Example 3]

A lithium secondary battery was produced in substantially the same manner as in Inventive Example 1, except that the positive electrode active material did not include the polyaniline powder (A) but included only anthraquinone (no amino groups).

[Comparative Example 4]

A lithium secondary battery was produced in substantially the same manner as in Inventive Example 1, except that the component (B) in Inventive Example 1 was replaced with anthraquinone (no amino groups).

[Comparative Example 5]

A lithium secondary battery was produced in substantially the same manner as in Inventive Example 1, except that the positive electrode active material did not include the polyaniline powder (A) but included only 1,4-diaminoanthraquinone.

[Comparative Example 6]

A lithium secondary battery was produced in substantially the same manner as in Inventive Example 1, except that the positive electrode active material did not include the polyaniline powder (A) but included only 2,6-diaminoanthraquinone.

The characteristics of each of the lithium secondary batteries in Inventive and Comparative Examples thus produced were measured and evaluated in substantially the same manner as in Inventive Example 1. The results are

shown below in TABLE 1.

[TABLE 1]

| | Anthraquinones | A:B (weight ratio) | Theoretical capacity density (mAh/g) | Measured capacity density (mAh/g) | Measured energy density (mWh/g) | Measured capacity density/theoretical capacity density |
|---|---|---|---|---|---|---|
| Inv. Ex. 1 | 1,5-diamino-anthraquinone (B) | 1:1 | 186.1 | 269 | 697 | 1.44 |
| Inv. Ex. 2 | 1,5-diamino-anthraquinone (B) | 4:1 | 162.7 | 236 | 683 | 1.45 |
| Inv. Ex. 3 | 1,5-diamino-anthraquinone (B) | 1:4 | 209.4 | 278 | 684 | 1.33 |
| Inv. Ex. 4 | 1,4-diamino-anthraquinone (B) | 1:1 | 186.1 | 238 | 615 | 1.28 |
| Inv. Ex. 5 | 2,6-diamino-anthraquinone (B) | 1:1 | 186.1 | 240 | 645 | 1.29 |
| Comp. Ex. 1 | 1,5-diamino-anthraquinone (B) | 0:1 | 224.9 | 250 | 539 | 1.11 |
| Comp. Ex. 2 | - | 1:0 | 147.2 | 150 | 523 | 1.02 |
| Comp. Ex. 3 | anthraquinone | 0:1 | 257.3 | 248 | 544 | 0.96 |
| Comp. Ex. 4 | anthraquinone | 1:1 | 202.3 | 225 | 591 | 1.11 |
| Comp. Ex. 5 | 1,4-diamino-anthraquinone (B) | 0:1 | 224.9 | 250 | 586 | 1.11 |
| Comp. Ex. 6 | 2,6-diamino-anthraquinone (B) | 0:1 | 224.9 | 228 | 529 | 1.01 |

The results of TABLE 1 showed that each Inventive Example had the value of measured capacity density/theoretical capacity density of not less than approximately 1.3 to provide a discharge capacity approximately 1.3 times higher than the theoretical capacity. Also, a driving voltage increased because of the polymerization reaction of an anthraquinone skeleton, so that each Inventive Example had an energy density of not less than 600 mWh/g which was higher than that of the electrodes including only anthraquinone or polyaniline used as the active material (Comparative Examples 1 to 3, 5 and 6).

In Comparative Examples 3 and 4, only the characteristics in accordance with the theoretical capacity were shown. It is inferred that this is because the anthraquinone in Comparative Examples 3 and 4 has no amino groups to cause no polymerization reaction and accordingly no interaction with polyaniline, whereas the occurrence of the polymerization reaction in the amino groups of the anthraquinone compound (B) in Inventive Examples increases the number of reacting electrons and provides an excellent interaction with polyaniline.

As for the mechanism of the occurrence of the polymerization reaction in the amino groups of the anthraquinone compound (B), the increase in the degree of polymerization provides more connection portions involved in battery reaction to provide more reacting portions, thereby improving the capacity density and the energy density. In this regard, when the capacity density and the energy density in Inventive Examples 1 and 3 were measured after the upper limit to the charging voltage was increased from 4.0 V to 4.3 V, it was found that the system where the upper limit to the charging voltage was increased to 4.3 V had a higher capacity density and a higher energy density, as shown in FIG. 3. It is inferred from this regard that the polymerization reaction in the amino groups in the component (B) occurs.

While specific forms of the embodiment of the present invention have been shown in the aforementioned inventive examples, the inventive examples are merely illustrative of the invention, but not limitative of the invention. It is contemplated that various modifications apparent to those skilled in the art could be made within the scope of the invention.

The power storage device according to the present invention is advantageously used as a power storage device for a lithium secondary battery and the like. The power storage device according to the present invention can be used for the same applications as the prior art secondary batteries, for example, for mobile electronic apparatuses such as mobile PCs, mobile phones and personal digital assistants (PDAs), and for driving power sources for hybrid electric cars, electric cars and fuel battery cars.

REFERENCE SIGNS LIST

1 Positive electrode current collector
2 Positive electrode
3 Electrolyte layer
4 Negative electrode
5 Negative electrode current collector

## Claims

1. A power storage device electrode serving as at least one of a positive electrode and a negative electrode which constitute a power storage device, the power storage device electrode containing an active material comprising:

   (A) an electrically conductive polymer; and
   (B) an anthraquinone compound having at least two amino groups and a structure represented by Formula (1) below.

[Chemical Formula 1]

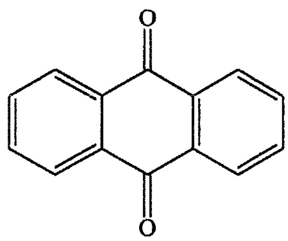

... (1)

2. The power storage device electrode according to claim 1, wherein the electrically conductive polymer (A) is at least one of polyaniline and a polyaniline derivative.

3. The power storage device electrode according to claim 1 or 2, wherein a weight ratio (A:B) between the electrically conductive polymer (A) and the anthraquinone compound (B) is in the range from 50:50 to 1:99.

4. A method of manufacturing a power storage device electrode comprising:

   mixing a powder of (A) an electrically conductive polymer and a powder of (B) an anthraquinone compound together to use a resulting mixture as an active material, the anthraquinone compound (B) having at least two amino groups and a structure represented by Formula (1) below.

[Chemical Formula 2]

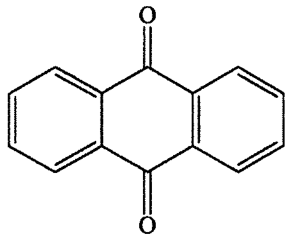

··· (1)

**5.** A power storage device comprising a power storage device electrode according to any one of claims 1 to 3.

FIG. 1

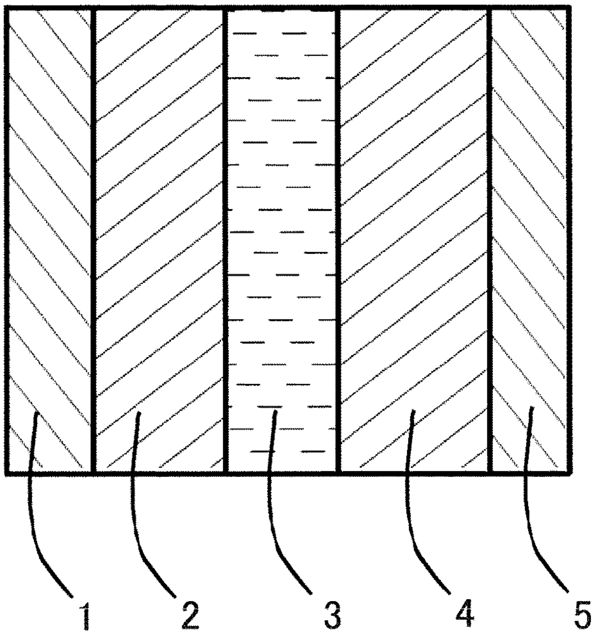


FIG. 2

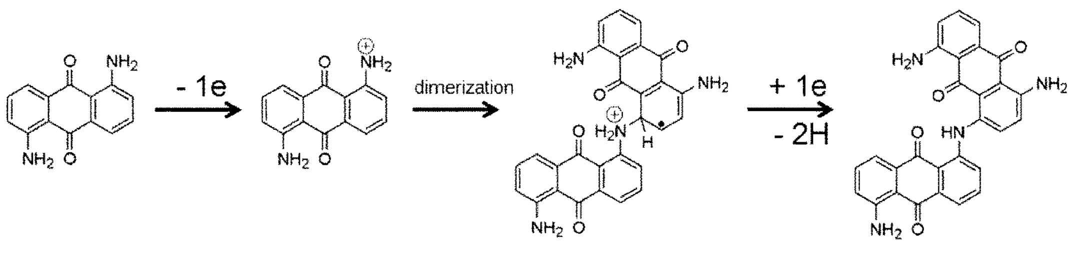

FIG. 3

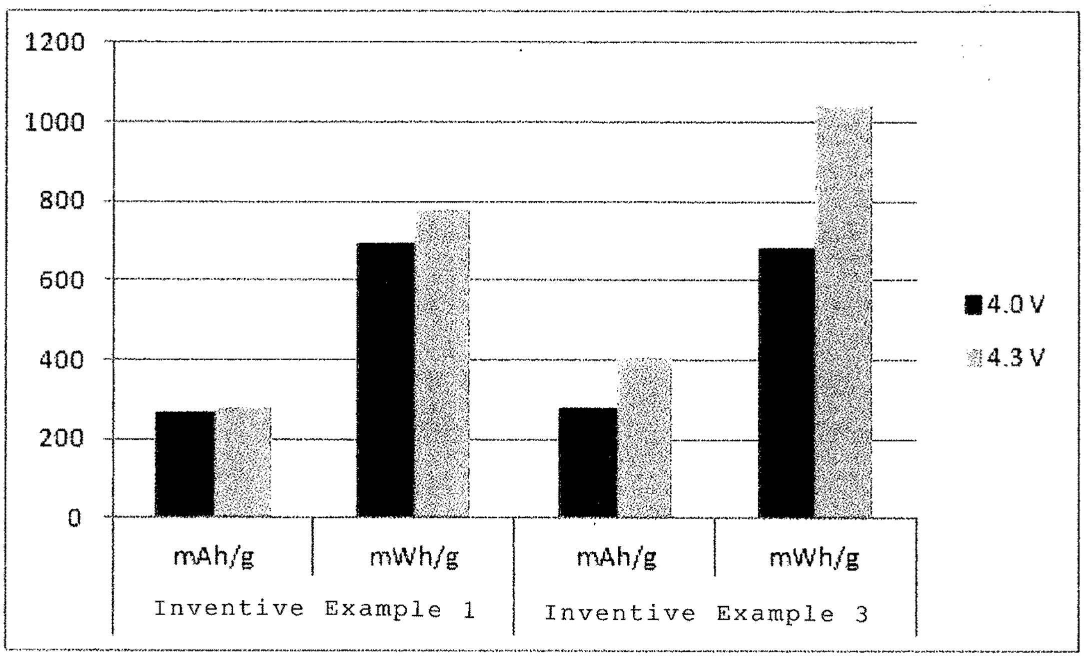
1200
1000
800
600
400
200
0
mAh/g
mWh/g
mAh/g
mWh/g
Inventive Example 1
Inventive Example 3
4.0 V
4.3 V

**INTERNATIONAL SEARCH REPORT**

International application No.
PCT/JP2014/067096

A. CLASSIFICATION OF SUBJECT MATTER
*H01M4/60*(2006.01)i, *H01M4/1399*(2010.01)i, *H01M4/36*(2006.01)i

According to International Patent Classification (IPC) or to both national classification and IPC

B. FIELDS SEARCHED

Minimum documentation searched (classification system followed by classification symbols)
H01M4/60, H01M4/1399, H01M4/36, H01G11/48

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 11-185759 A (NEC Corp.),<br>09 July 1999 (09.07.1999),<br>claims 1 to 7; paragraphs [0044] to [0047], [0058], [0062]<br>& US 6277518 B1 & EP 924782 A1<br>& DE 69837190 D | 1-5<br>1-5 |
| X<br>Y | JP 2002-157995 A (Sanyo Electric Co., Ltd., Sanyo Electronic Components Co., Ltd.),<br>31 May 2002 (31.05.2002),<br>paragraphs [0011] to [0019]<br>(Family: none) | 1,3-5<br>2 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 July, 2014 (24.07.14) | 05 August, 2014 (05.08.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/067096

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-126610 A (NEC Corp.), 11 May 1999 (11.05.1999), claims 1 to 7; paragraphs [0013] to [0061], [0091] to [0098] & EP 911893 A1 & DE 69811819 D | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI91997259864 A
- JP HEI6199420692 A
- JP HEI111999144732 A


### Non-patent literature cited in the description


- *Nikkei Electronics,* 13 December 2010, 73-82